# DEMANDE DE BREVET EUROPEEN

(11) **EP 1 925 634 A1**
(43) Date de publication de la demande: **28.05.2008**
(21) Numéro de dépôt: 07291384.1
(22) Date de dépôt: 21.11.2007
(51) Int. Cl.: C08J 5/10, C08K 3/34

(54) **Procédé de préparation d'un matériau rigide nanocomposite**

(30) Priorité: 21.11.2006 FR 0610183
(71) Demandeur: CENTRE NATIONAL DE LA RECHERCHE SCIENTIFIQUE (CNRS), 75016 Paris (FR)
(72) Inventeur: Grillet, Anne-Cécile, 73100 Le Montcel (FR); Dang, Tan Tai, Ho Chi Minh-Ville (VN); Huy, Ha Thuc, Ho Chi Minh Ville (VN); Merle, Gérard, 77370 La Chapelle du Mont du Chat (FR)
(74) Mandataire: Colombet, Alain André

(57) **Abrégé**

L'invention concerne un procédé de préparation d'un matériau constitué par une matrice de PVC renforcée par une argile, comprenant les étapes successives suivantes:
(1) préparation d'une argile modifiée par mélange d'une argile naturelle avec un composé solvatant non volatil, le mélange étant mis en oeuvre en appliquant au moins l'une des contraintes mécaniques suivantes :
- compression, à une vitesse comprise entre 0,01 et 0,5 m/s ;
- cisaillement, à une vitesse comprise entre 0,05 et 5 m/s ;
- friction, à une vitesse comprise entre 0,05 et 5 m/s ;
- attrition, à une vitesse comprise entre 2 et 4 m/s ;

(2) incorporation de l'argile modifiée dans le PVC par malaxage à l'état fondu, les conditions de mise en oeuvre du malaxage étant telles que :
- la vitesse de compression est comprise entre 0,1 et 5 m/s ;
- la vitesse de cisaillement est comprise entre 0,05 et 5 m/s.

## Description

La présente invention concerne un procédé de préparation d'un matériau rigide nanocomposite constitué par une matrice de PVC renforcée par une argile.

Le PVC est un matériau largement utilisé, notamment sous la forme de PVC rigide, dans le domaine de la construction de bâtiments.

Les compositions de PVC rigide contiennent généralement, outre le PVC, des charges minérales, des adjuvants pour la résistance au choc constitués de copolymères notamment sous forme de particules, des stabilisants thermiques et d'autres constituants de mise en oeuvre.

Pour les matériaux du type PVC rigides utilisés pour les menuiseries, la rigidité élevée et le caractère isolant thermique sont des propriétés recherchées. Une bonne rigidité est obtenue en choisissant une géométrie appropriée des pièces en PVC. Cependant, la rigidité ainsi obtenue n'est pas toujours suffisante.

On a cherché à remédier à cette situation par addition de raidisseurs en acier, ce processus étant cependant compliqué à mettre en oeuvre.

L'incorporation de charges fibreuses a également été essayée, mais l'état de surface final des pièces élaborées n'est pas satisfaisant.

Par ailleurs, il est connu d'améliorer certaines propriétés de matériaux polymères, par exemple les propriétés mécaniques (rigidité, résistance aux chocs) ou la tenue au feu, par incorporation d'une charge minérale lamellaire (par exemple des argiles) à une matrice polymère, pour l'élaboration de matériaux nanocomposites, dans lesquels la charge est dispersée sous forme de nanoparticules. Ces matériaux renforcés peuvent généralement être transformés ensuite par les procédés classiques tels que l'extrusion ou l'assemblage par thermosoudage.

Pour qu'une argile puisse être incorporée à un matériau polymère pour former un matériau composite, il est nécessaire que l'argile soit organophile. Les argiles naturelles ne présentent pas cette propriété.

En outre, l'utilisation d'une argile dans laquelle la distance entre les feuillets a été augmentée par exfoliation totale ou partielle est favorable à l'obtention d'une répartition de la charge à l'échelle nanométrique dans le matériau composite "polymère/charge minérale".

Différentes solutions sont proposées dans l'art antérieur, pour obtenir l'un et/ou l'autre des résultats ci-dessus, mais elles ne sont pas totalement satisfaisantes.

En effet les argiles rendues organophiles par les méthodes classiques par échange d'ion, en particulier celles contenant des ions ammonium, conduisent à la dégradation des formulations de PVC rigide lors de leur mise en oeuvre.

Le but de la présente invention est de remédier aux inconvénients des techniques antérieures.

Les propriétés d'un matériau dépendent de sa composition, mais aussi très fortement de l'architecture du mélange à toutes les échelles : depuis l'échelle nanométrique jusqu'à celle de l'objet fini. Ainsi, le procédé de mélangeage des constituants du matériau est aussi conçu comme un procédé de structuration du matériau, permettant d'optimiser les relations composition-structure-combinaison-de-propriétés.

A cet effet, l'invention propose un procédé de préparation d'un matériau constitué par une matrice de PVC renforcée par une argile, caractérisé en ce qu'il comprend les étapes successives suivantes:
(1) préparation d'une argile modifiée par mélange d'une argile naturelle avec un composé solvatant non volatil, le mélange étant mis en oeuvre en appliquant au moins l'une des contraintes mécaniques suivantes :
   - compression, à une vitesse comprise entre 0,01 et 0,5 m/s ;
   - cisaillement, à une vitesse comprise entre 0,05 et 5 m/s ;
   - friction, à une vitesse comprise entre 0,05 et 5 m/s ;
   - attrition, à une vitesse comprise entre 2 et 4 m/s ;
(2) incorporation de l'argile modifiée dans le PVC par malaxage à l'état fondu, les conditions de mise en oeuvre du malaxage étant telles que :
   - la vitesse de compression est comprise entre 0,1 et 5 m/s ;
   - la vitesse de cisaillement est comprise entre 0,05 et 5 m/s.

De telles conditions opératoires génèrent au sein du mélange visqueux :
- un gradient de cisaillement moyen de 10 à 1000 s⁻¹;
- des conditions de mélangeage dispersif, plus précisément un champ de cisaillement pouvant varier au moins d'un facteur 10;
- et un champ de contraintes de cisaillement au moins égal à 10⁴ Pa.

En effet, la désagrégation des particules résulte de la contrainte visqueuse imposée par le polymère sur les particules d'argiles; cette contrainte est le produit du gradient de cisaillement par la viscosité du polymère. Les valeurs correspondantes sont d'au moins 10 s⁻¹ pour le gradient de cisaillement, et d'au moins 10³ Pa.s (typiquement 10⁴) pour la viscosité, dans les conditions du mélangeage.

De plus, comme un écoulement de cisaillement simple est inadapté à la désagrégation de particules au sein d'une matrice polymère, les conditions de mélangeage doivent être dispersives, c'est à dire générer aussi bien des zones de faible sollicitation que des zones de fort cisaillement, avec en outre une sollicitation élongationnelle (convergent - divergent) telle que celle obtenue entre deux pales contra-rotatives.

La première étape du procédé selon l'invention est l'incorporation du composé solvatant dans l'argile, ce composé ayant pour effet de solvater les ions alcalins de l'argile et d'augmenter la distance inter-feuillets.

Cette étape de mélangeage peut être effectuée par broyage et triturage, par exemple à l'aide d'un dispositif du type pilon/mortier ou d'un broyeur à boulets ou à billes (ce type de matériel se prêtant bien à la combinaison broyage-trituration-mélangeage des produits peu durs et de granulométrie fine correspondant à l'étape 1), ou d'un mélangeur interne (de type Brabender ou autre), ou de tout autre dispositif capable de produire des conditions de mélange telles que définies ci-dessus. Dans le dispositif du type pilon/mortier par exemple, dans le cas où s'exerce une friction entre le pilon et le mortier, le mélange est alors sollicité en tant que « troisième corps » selon la définition de la tribologie.

Lors de la première étape, la température est de préférence la température ambiante. Aucun chauffage extérieur n'est donc apporté volontairement au cours de cette première étape, de manière à limiter la fluidification du composé solvatant du mélange susceptible de survenir par l'élévation de température. En effet, la viscosité du composé solvatant influence la modification de l'argile sous l'effet de la trituration.

Un compromis est à mettre au point entre les différents paramètres du mélangeage, le temps, la température, et un post-traitement éventuel. En particulier, un post-traitement éventuel peut consister à porter le mélange à une température supérieure à la température de fusion du composé solvatant, après le mélangeage, si le mélangeage a été effectué à une température inférieure. Ainsi, on réalise un compromis entre le mélangeage qui est favorisé par la faible viscosité, et le post-traitement à plus haute température favorisant l'achèvement de la réaction.

Différents tests peuvent être effectués pour contrôler la qualité du résultat obtenu lors de la première étape, c'est-à-dire la qualité de l'argile modifiée :
- la modification de l'argile est contrôlée par diffraction des rayons X, qui permet d'une part de mettre en évidence la disparition des raies de diffraction de l'argile initiale, d'autre part l'apparition d'une nouvelle structure. Par exemple, lorsque l'agent solvatant est susceptible de donner deux structures différentes correspondant à des distances entre feuillets différentes, on vérifie l'apparition de l'une, de l'autre ou des deux structures à la fois, la structure dans laquelle la distance entre les feuillets est la plus grande étant plutôt recherchée ;
- la disparition du composé solvatant resté libre est contrôlée par diffraction des rayons X ou par analyse enthalpique différentielle (DSC) ;
- la mesure de la répartition granulométrique est également contrôlée, aussi bien pour évaluer le résultat du procédé de mélangeage que pour les étapes suivantes. Une taille des particules d'argile modifiée inférieure à 100 µm environ est préférable, cette valeur permettant de s'assurer que les agrégats formés lors de la mise en contact des constituants du mélange ont été réduits à une taille suffisamment fine par le broyage ; cette taille est obtenue directement par le procédé, ou, si besoin, après tamisage.

La deuxième étape du procédé selon l'invention est l'incorporation de l'argile modifiée obtenue à l'étape (1) dans le PVC. Cette étape peut être mise en oeuvre, de sorte à obtenir les conditions de malaxage définies ci-dessus, par exemple par malaxage dans un mélangeur interne à pales interpénétrantes de type Banbury, Brabender, Haake ou autre, avec une vitesse périphérique des pales comprise entre 0,05 et 1m/s, ou par extrusion dans une extrudeuse mono-vis ou bi-vis, ou par moulage par injection à compactage dynamique.

La température est celle adaptée à la transformation du PVC rigide (150 à 190°C).

Un compromis est à mettre au point entre la formulation et les différents paramètres du malaxage, le temps et la température, pour obtenir l'ensemble des propriétés recherchées (rigidité, résistance au choc, aspect, etc..) selon le type d'architecture recherchée pour le matériau, en particulier la qualité de désagrégation et de dispersion plus ou moins fine et complète de l'argile.

Parmi les paramètres de la deuxième étape du procédé, les conditions de cisaillement, plus précisément les contraintes de cisaillement imposées au sein du mélange sous l'effet combiné du champ de vitesses de cisaillement et de la viscosité du polymère, sont adaptées pour obtenir d'une part la désagrégation des particules d'argile et d'autre part leur dispersion et l'homogénéité du mélange, tout en en évitant la dégradation. Les dégradations à éviter sont la dégradation thermique ou thermomécanique du PVC, et celle de l'argile.

Il est connu que, selon son intensité, le broyage des argiles provoque d'abord une délamination, puis une fragmentation des feuillets, puis leur destruction. Il est connu aussi que des conditions mécaniques trop sévères lors du malaxage du PVC provoquent une dégradation mécanochimique, qui se manifeste par une augmentation du couple du malaxeur au cours du malaxage.

Le couple mesuré sur le mélangeur utilisé est une indication globale de la contrainte : par exemple pour un PVC dont la viscosité à 180°C varie entre 10⁶ et 10⁴ Pa.s pour des gradients de cisaillement valant respectivement 10 et 10⁴ s⁻¹, le couple est de 30 Nm environ à 30 tours par minute.

L'intensité du traitement de malaxage de la deuxième étape du procédé selon l'invention, estimée par le produit du couple par la durée, est donc réglée par l'action sur les paramètres suivants : température (action sur la viscosité), vitesse de rotation et taux de remplissage du mélangeur (action sur le cisaillement), et durée.

Le PVC obtenu par le procédé selon l'invention présente de nouvelles propriétés, en particulier des propriétés mécaniques et viscoélastiques améliorées.

La résistance au choc est favorisée par une combinaison formulation - conditions de mélangeage conduisant à un réseau dissipatif et à une exfoliation incomplète de l'argile. Cette combinaison s'obtient en limitant la désagrégation des particules d'argile à de petits groupes de feuillets dits « particules primaires ». Une telle architecture du matériau, mise en évidence par microscopie et par un comportement viscoélastique particulier, résulte des conditions de fabrication du matériau.

Le composé solvatant est avantageusement un polymère. Le polyoxyéthylène (POE) et les polyéthylène imines (PEI) sont particulièrement préférées.

Lorsque le composé solvatant est le POE, la proportion en poids argile/POE utilisée dans la première étape est dans la gamme 10/1 à 10/10, de préférence 10/1 à 10/5, avantageusement de 10/1 à 10/2.

La masse molaire du polymère utilisé en tant qu'agent solvatant est un paramètre de réglage pour les propriétés recherchées. En général, les propriétés de résistance au choc sont favorisées par des masses molaires élevées (par exemple un POE de masse molaire 100 000 g/mol), et les propriétés optiques et d'aspect sont favorisées par les masses molaires faibles.

L'argile naturelle utilisée peut être une smectite (par exemple une montmorillonite (mmt) ou une bentonite), une hectorite ou une vermiculite.

Selon une réalisation préférentielle, on utilise une montmorillonite et du POE en tant que composé solvatant.

Les exemples suivants sont destinés à illustrer l'invention sans en limiter la portée.

Dans les exemples 2 à 6, et 8 à 13, le mélangeur interne Brabender utilisé donne, à 30 tours par minute, un champ de cisaillement étalé de 5 à 80 s⁻¹ pour un gradient moyen de 13 s⁻¹ environ. En outre, lors de la mise en oeuvre de la deuxième étape du procédé, le couple reste dans la gamme de 10 à 50 Nm, la vitesse de malaxage est comprise entre 30 et 50 tours par minute et la durée de malaxage varie de 4 à 60 minutes.

### Exemple 1

### Modification d'une argile de type montmorillonite par du poly(oxyde d'éthylène) - Méthode "pilon-mortier"

### Mode opératoire

L'argile utilisée est une montmorillonite commerciale, commercialisée par la société Süd Chemie (Allemagne), sous la référence N757.

Le POE utilisé est commercialisé par la société Aldrich. Il présente une masse molaire de 1500 g/mol.

L'argile est tout d'abord séchée à 250°C pendant 200 minutes pour éliminer l'eau qu'elle contient, puis on réalise le mélange entre l'argile et la quantité souhaitée de POE par broyage dans un mortier de diamètre 80 mm, à 60 tours par minute environ, en utilisant comme proportion du mélange 3 g de POE pour 10 g d'argile.

Ainsi, après 20 minutes de broyage en mortier à température ambiante, avec une vitesse de friction-cisaillement de 0,2 m/s environ, le mélange est homogène. Le caractère homogène du mélange est contrôlé par la détermination des tailles des particules du mélange par tamisage avec une ouverture de tamis égale à 112 µm, cette valeur étant choisie pour s'assurer que les agrégats formés lors de la mise en contact des constituants du mélange ont été réduits à une taille suffisamment fine par le broyage.

Le mélange est ensuite placé dans un four à 90°C pendant 8 heures, pour que le POE fondu puisse s'intercaler dans les galeries de l'argile.

### Résultats

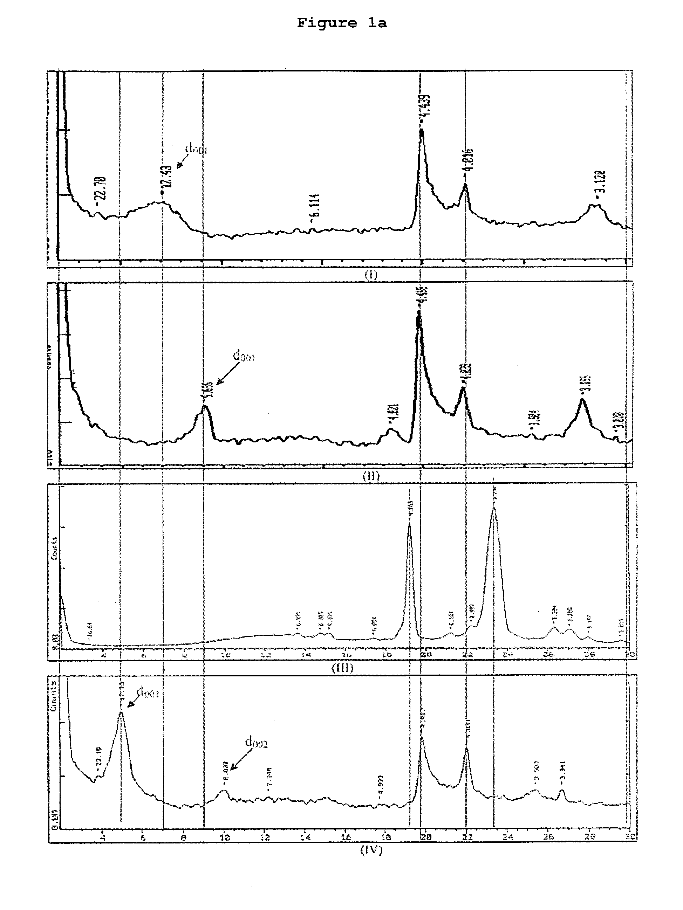

La figure 1a) représente, de haut en bas, les diffractogrammes des rayons X (raie K_{α} du Cuivre : λ = 0,154 nm) de l'argile seule non séchée (diffractogramme I), de l'argile seule séchée à 250°C pendant 200 minutes (diffractogramme II), du POE seul (diffractogramme III) et du mélange argilePOE (diffractogramme IV).

Le pic correspondant à d₀₀₁ ≈ 1,24 nm (calculé pour la valeur expérimentale 2θ ≈ 7° par la loi de Bragg λ = 2d sinθ) de la N757 seule avant le séchage s'accorde avec les résultats de la littérature concernant les effets de l'humidité sur les argiles (par exemple S. Varghese, J. Karger-Kocsis, K.G. Gatos; Polymer; 44 (2003) 3977-3983). Après le séchage à 250°C pendant 200 minutes, l'essentiel de l'eau moléculaire entre les feuillets de N757 s'est évaporé. La valeur de d₀₀₁ de la N757 a diminué et a atteint la valeur de 0,97 nm correspondant à 2θ ≈ 9°.

Sachant que la distance inter-couche standard de la montmorillonite naturelle est d₀₀₁= 0,96 nm, il est possible de conclure qu'après le séchage, pratiquement toute l'eau a été éliminée, la N757 ayant alors la structure standard de la montmorillonite naturelle.

Après avoir mélangé la N757 et le POE₁₅₀₀, le pic d₀₀₁ = 0,97 nm de la N757 seule a disparu et un nouveau pic correspondant à d₀₀₁ = 1,77 nm est apparu, pour une valeur de 2θ ≈ 5°. Ceci montre que le POE s'est inséré entre les couches de N757, la d₀₀₁ est donc passée de 0, 97 nm (pour la N757 seule) à 1,77 nm (pour le mélange N757-POE). De plus, on peut observer les pics (002) et (003), ce qui montre que la structure cristalline est bien organisée.

Les deux pics caractéristiques du POE cristallin, qui se situent à 2θ = 19,1° et 2θ = 23,3°, ont aussi disparu après le mélange avec la N757. Ceci implique que le POE n'a pas pu cristalliser dans le mélange N757-POE, car le POE est inséré dans les galeries de N757. L'interaction entre le POE et les groupes polaires sur la surface des feuillets de N757 a empêché la cristallisation libre du POE.

On peut donc conclure que le POE s'est bien inséré dans la N757.

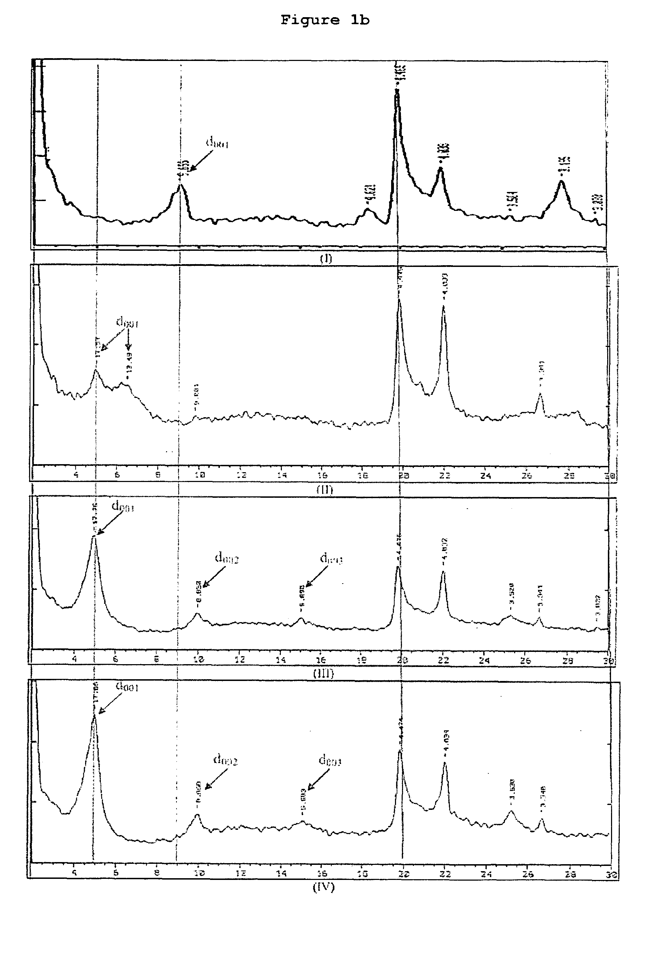

Un tel résultat est également obtenu d'une part en faisant varier la masse molaire du POE entre 10 000 et 100 000 g/mol, et d'autre part en faisant varier le rapport massique montmorillonite/POE entre 10/1 et 10/10. A titre d'exemple, la figure 1b montre l'effet du taux de POE de masse 1500 g/mol sur la structure des mélanges, pour des rapports de masse N757/POE respectivement égaux à 10/1 (diffractogramme II), 10/3 (diffractogramme III), 10/5 (diffractogramme IV). A titre de comparaison, la figure 1b montre également le diffractogramme de l'argile seule séchée à 250°C pendant 200 minutes (diffractogramme I).

Les spectres XRD montrent que les deux structures possibles de POE inséré dans l'argile peuvent apparaître, correspondant respectivement à des distances d₀₀₁ de 1,77 et 1,35 nm.

### Exemple 2

### Modification d'une argile de type montmorillonite par du poly(oxyde d'éthylène)- Méthode "Brabender-direct"

### Mode opératoire

Un POE de masse molaire 100 000 g/mol, et dont la température de fusion est 67°C, a été mélangé directement avec l'argile N757 (rapport en masse N757/POE_{100 000} = 10/3) sur un malaxeur Brabender à 90°C, à 50 tours par minute pendant 30 minutes. Le produit a été analysé par diffraction aux rayons X.

Cette méthode dite « Brabender-direct » donne un résultat identique à la méthode « pilon-mortier ». Avec les deux méthodes de mélange, le pic d₀₀₁ de N757-POE correspond à la même valeur de 1,77 nm. La méthode n'a donc pas d'influence sur l'insertion. Néanmoins, la méthode "Brabender direct" est plus simple et plus rapide à mettre en oeuvre.

### Exemple 3

### Optimisation du procédé de l'exemple 2

### Influence de la masse du mélange

Parmi les principaux paramètres qui déterminent les conditions de mélange dans le mélangeur interne, le remplissage de la chambre de malaxage joue un rôle essentiel : si la chambre est incomplètement remplie, le malaxage est beaucoup moins poussé que dans le cas contraire car le cisaillement y est moins intense.

Des essais ont été effectués en introduisant dans la chambre du mélangeur différentes masses (masse totale = 26 g, 46 g et 60 g) du mélange N757-POE préparé selon le mode opératoire décrit dans l'exemple 2.

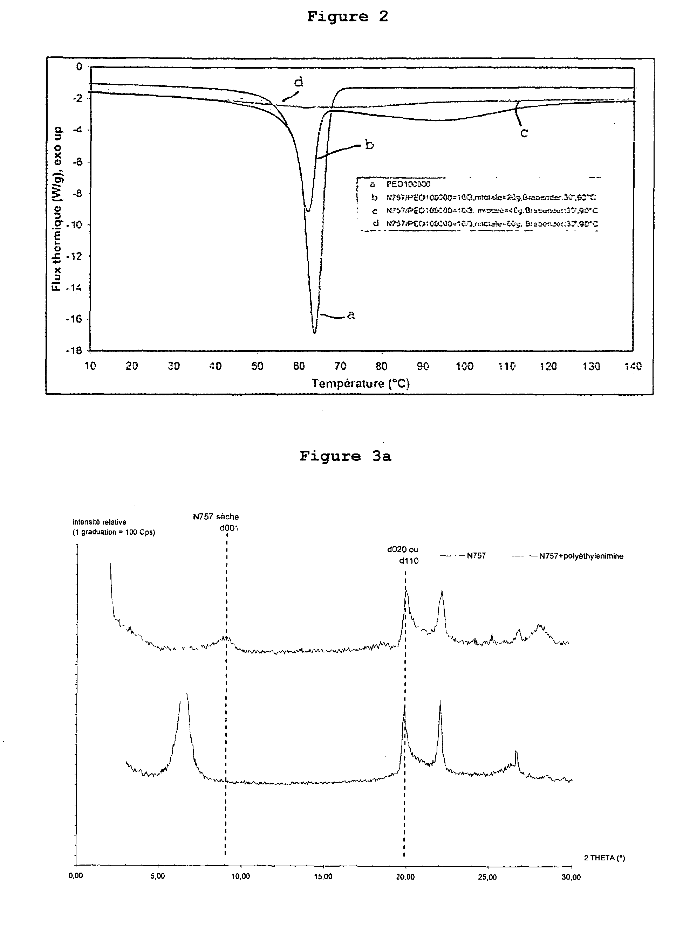

Le produit mélangé a été analysé ensuite par DSC. Les résultats obtenus sont représentés sur la figure 2. Les courbes a, b, c et d représentent les résultats obtenus respectivement pour le PEO seul, et pour une masse de mélange N757-POE de 26 g, 46 g et 60 g.

Lorsque la masse ajoutée dans la chambre de malaxage augmente de 26 g à 46 g, la valeur du couple augmente aussi. Ceci signifie que le cisaillement des éléments du mélange augmente, ce qui conduit à une bonne insertion du POE dans la N757, correspondant à la disparition du pic endothermique de POE sur la courbe DSC du mélange ainsi obtenu.

Mais quand la masse ajoutée dans la chambre de Brabender excède la capacité de la chambre de malaxage (cas de la masse égale à 60g), le malaxage est moins bon, moins homogène ou moins rapide, et le mélange montre alors un petit pic endothermique de fusion du POE libre.

Le malaxage du mélange N757-POE sur mélangeur Brabender est donc meilleur pour une masse permettant de remplir la chambre de malaxage sans toutefois excéder sa capacité.

### Exemple 4

### Optimisation du procédé de l'exemple 2

### Influence de la durée de malaxage

Différents essais ont été réalisés en fixant la température (90°C), la vitesse des pales (50 tours par minute, soit un gradient de cisaillement moyen de l'ordre de 25 s⁻¹) et le rapport en masse de N757/POE = 10/3, d'une part avec une durée de malaxage de 30 minutes et d'autre part avec une durée de malaxage de 60 minutes. Les produits obtenus ont été analysés par diffraction des rayons X.

Il apparaît que la valeur de d₀₀₁ ne change pas avec l'augmentation du temps de malaxage. Un temps de malaxage égal à 30 minutes a donc été choisi pour la suite des études.

### Exemple 5

### Optimisation du procédé de l'exemple 2

### Influence de la répartition des tailles des particules d'argile après mélange

L'argile N757 et POE ont été mélangés directement sur mélangeur Brabender pendant 30 minutes à 90°C, sans homogénéisation préalable.

Plusieurs échantillons ont été préparés, en faisant varier le rapport N757/POE de 10/1 à 10/10.

Pour analyser la répartition des tailles des grains du mélange, 10 grammes de chaque échantillon ont été tamisés pendant 25 minutes, avec une puissance du tamiseur (Retsch, modèle : Vibro 58867) égale à 70/100. Les résultats sont présentés dans le tableau 1.

**Tableau 1**

| Echantillon | % de masse vs dimension des mélanges N757-POE | | | |
|---|---|---|---|---|
| | d > 112 µm | 71<d<112µm | 30<d<71µm | d < 30µm |
| N₇₅₇ seul | 0 | 35 | 65 | 0 |
| N₇₅₇/POE₁₀₀₀₀₀ =10/1 | 29 | 25 | 46 | 0 |
| N₇₅₇/POE₁₀₀₀₀₀ =10/2 | 23 | 23 | 52 | 2 |
| N₇₅₇/POE₁₀₀₀₀₀ =10/3 | 21 | 19 | 46 | 14 |
| N₇₅₇/POE₁₀₀₀₀₀ =10/4 | 30 | 24 | 36 | 10 |
| N₇₅₇/POE₁₀₀₀₀₀ =10/5 | 33 | 18 | 37 | 13 |
| N₇₅₇/POE₁₀₀₀₀₀ =10/7 | 39 | 11 | 20 | 30 |
| N₇₅₇/POE₁₀₀₀₀₀=10/10 | 47 | 16 | 18 | 19 |

Les résultats du tableau 1 montrent que la répartition des tailles des particules d'argile N757 dépend du taux de POE. D'une part, la fraction des tailles inférieures à 30µm augmente significativement avec le taux de POE, en tant que résultat du malaxage. D'autre part, il apparaît une fraction supérieure à 112 µm, et ce d'autant plus que le taux de POE du mélange augmente. Ainsi, le fait d'introduire un mélange qui n'a pas été homogénéisé préalablement a conduit à l'agrégation de la N757 en présence du POE fondu. Pour éviter ce phénomène d'agrégation, il est donc nécessaire de former d'abord un mélange N757/POE homogénéisé.

### Exemple 6

### Modification d'une argile de type montmorillonite par du poly(oxyde d'éthylène). Combinaison des méthodes « pilon-mortier » et « Brabender » : méthode dite « combinée »

Le protocole suivi est le suivant : on réalise un broyage (pilon-mortier) de l'argile N757 séchée avec le POE jusqu'à obtention d'un mélange homogène, puis on effectue un malaxage de 46 grammes de ce mélange dans la chambre du mélangeur interne Brabender pendant 30 minutes à 90°C avec une vitesse de 50 tours par minute (soit une vitesse de cisaillement en périphérie des pales de 0,08 m/s environ).

Avec cette méthode, la taille des grains du matériau obtenu est inférieure à 112 µm, c'est-à-dire que la taille des grains du mélange N757-POE n'a pas augmenté après malaxage sur Brabender par rapport à ceux de la montmorillonite initiale.

### Exemple 7

### Modification d'une argile de type montmorillonite par de la polyéthylène-imine

### Mode opératoire

Le même mode opératoire que celui décrit dans l'exemple 1 a été suivi, en remplaçant le POE par une PEI de masse molaire 423 g/mol.

Deux échantillons d'argile ont été utilisés : la montmorillonite N757 de l'exemple 1, et une montmorillonite d'origine naturelle de la province de Lam Dong, au Vietnam, ci-après dénommée LD.

Le rapport stoechiométrique est de 1 ion échangeable de montmorillonite pour 2 atomes d'azote de PEI, soit, pour 100 g de montmorillonite, 11,2 g de PEI pour la N757 et 4,8 g de PEI pour la LD.

### Résultats

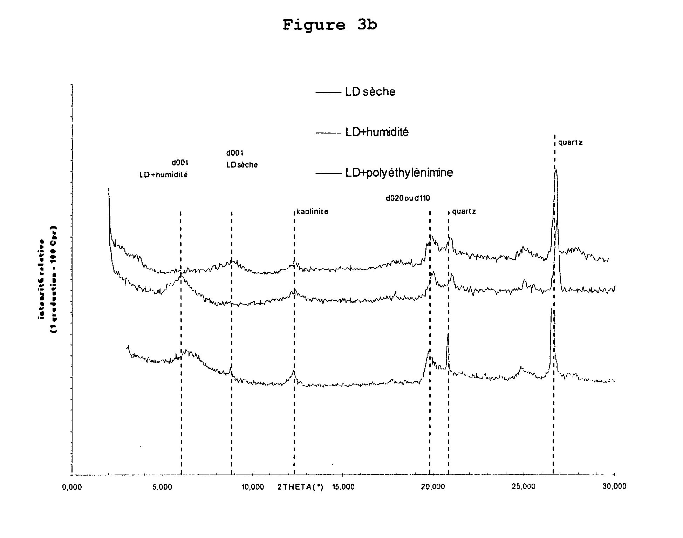

Les figures 3a et 3b représentent les diffractogrammes des rayons X de l'argile seule (N757 pour la figure 3a, et LD pour la figure 3b, courbes du haut) et du mélange argile-PEI (courbes du bas) réalisé tel qu'indiqué ci-dessus.

Il apparaît que, dans le mélange argile-PEI, la distance d₀₀₁ passe d'une valeur de 0,97 nm pour l'argile seule à une valeur de 1,41 nm pour le mélange argile-PEI. L'augmentation de la distance d₀₀₁ montre que la PEI s'est insérée entre les couches d'argile, exactement la même valeur de distance étant obtenue pour les deux argiles utilisées.

### Exemple 8

### Préparation d'un matériau nanocomposite PVC/argile modifiée et caractérisation

### Mode opératoire

Le PVC utilisé est un PVC-S (obtenu par polymérisation en suspension), qui a un indice de viscosité K = 65, commercialisé par la société Solvay (France).

L'argile modifiée, obtenue selon le mode opératoire décrit dans l'exemple 1, est mélangée avec le PVC dans une proportion de 100/3 et 100/5 (parties en masse), à l'état fondu (T = 170°C). Le mélange est réalisé sur un malaxeur interne de type Brabender qui a des pales de malaxage, à une vitesse de 50 tours par minute pendant une durée de 6 minutes.

Le mélange obtenu est ensuite immédiatement mis sous forme de plaque à l'aide d'une presse à plateaux chauds (T = 175°C), qui permet l'application de la pression à chaud sur la matière pour emplir correctement le moule, puis le maintien de la pression sur le moule pendant le refroidissement (le moule étant alors calé pour donner une plaque d'épaisseur voulue). Les éprouvettes pour les essais standard de choc d'après la norme « Izod D638 » (entaillé) sont ensuite découpées dans les plaques.

### Résultats

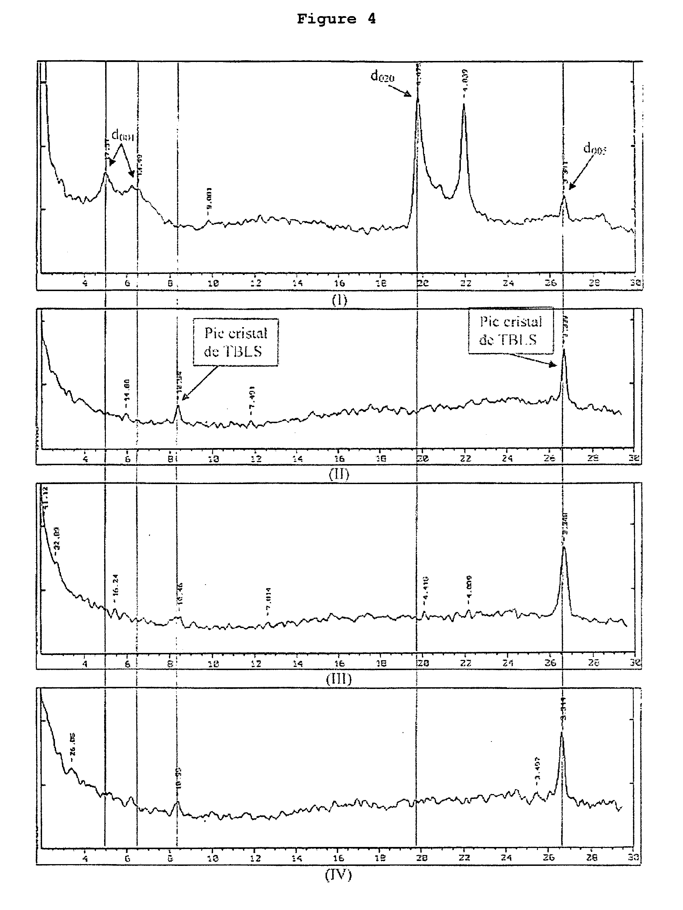

La figure 4 représente, de haut en bas, les diffractogrammes des rayons X obtenus pour l'argile modifiée constituée par le mélange argile/POE dans un rapport 10/1 (diffractogramme I), pour le PVC seul (diffractogramme II), pour le mélange PVC-argile modifiée dans un rapport 100/3 (diffractogramme III), et pour le mélange PVC/argile modifiée dans un rapport 100/5 (diffractogramme IV).

Le mélange N757-POE présente ici deux pics correspondant à des distances de 1,76 nm et 1,35 nm respectivement. Il s'agit des distances d₀₀₁ correspondant aux deux structures possibles avec le PEO. La distance d₀₀₁ égale à 1,35 nm correspond à l'insertion d'une monocouche tandis que celle égale à 1,76 nm correspond à une bicouche de POE.

Pour les mélanges avec le PVC, on constate que les pics d₀₀₁ du mélange N757-POE ont disparu, et que le pic caractéristique de la N757 (d₀₂₀) a également disparu. (Vers 27°, le pic correspondant au stabilisant TBLS (sulfate de plomb tribasique, commercialisé par la société Cognis) contenu dans le PVC seul est superposé au pic d₀₀₅ de la N757). On constate que la structure du système N757-POE a été complètement désorganisée lors du mélange avec le PVC.

### Caractérisation par microscopie électronique à transmission (MET)

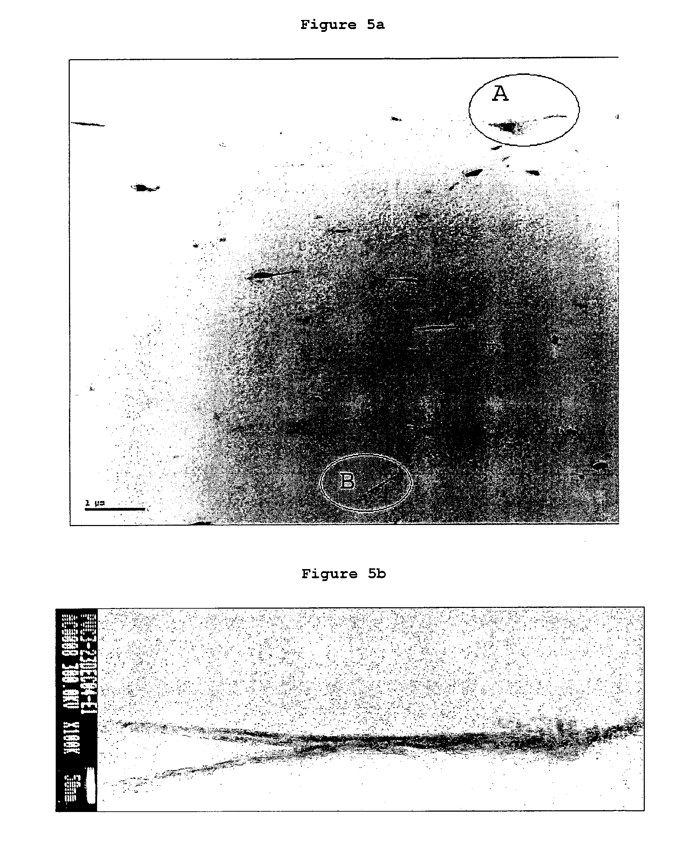

Des images MET du mélange PVC-argile modifiée sont présentées sur les figures 5a et 5b.

La figure 5a fait apparaître deux sortes de charges (notées A et B) dans la matrice PVC : des tactoïdes relativement gros et massifs (A) et des tactoïdes beaucoup plus fins et effilés (B). Les tactoïdes (A) sont constitués de montmorillonite possédant une distance interfoliaire que les images MET à fort grandissement permettent d'estimer à environ 1,35 nm, ce qui correspond à de la montmorillonite insérée par une monocouche de POE dans l'espace interfoliaire.

Les petits tactoïdes (B), d'une longueur de 1 µm environ, proviennent de la séparation des grands tactoïdes (A).

Ce phénomène de désagrégation par clivage des tactoïdes se propage jusqu'à l'échelle de particules primaires, comme illustré sur la figure 5b obtenue à fort grandissement.

### Exemple 9

### Préparation d'un matériau nanocomposite PVC/argile modifiée Effet de l'intensité du malaxage sur la résistance au choc

L'intensité du malaxage est un paramètre essentiel influençant l'architecture du mélange, car elle a un effet sur la désagrégation de l'argile et la dispersion du mélange. La résistance au choc étant particulièrement sensible à cette architecture, une étude a été réalisée en faisant varier l'intensité du malaxage simplement par la durée de l'opération.

### Mode opératoire

Le PVC utilisé est identique à celui de l'exemple 8.

L'argile modifiée obtenue selon le mode opératoire décrit dans l'exemple 2 est mélangée avec le PVC dans une proportion 100/3 (3 parties d'argile pour 100 parties de PVC, parties en masse), à l'état fondu (T = 170°C). Le mélange est réalisé comme indiqué dans l'exemple 8, pendant des durées de 4, 6, 8 et 10 minutes.

### Résultats

Le tableau 2 montre qu'un optimum pour l'énergie de rupture par choc est obtenu pour une durée de malaxage de 6 minutes.

**Tableau 2**

| temps de malaxage (min) | 4 | 6 | 8 | 10 |
|---|---|---|---|---|
| énergie de rupture par choc (kJ/m²) | 3,7 | 4, 4 | 3,0 | 3,0 |

### Exemple 10

### Propriétés viscoélastiques et mécaniques du matériau nanocomposite

### Module de conservation.

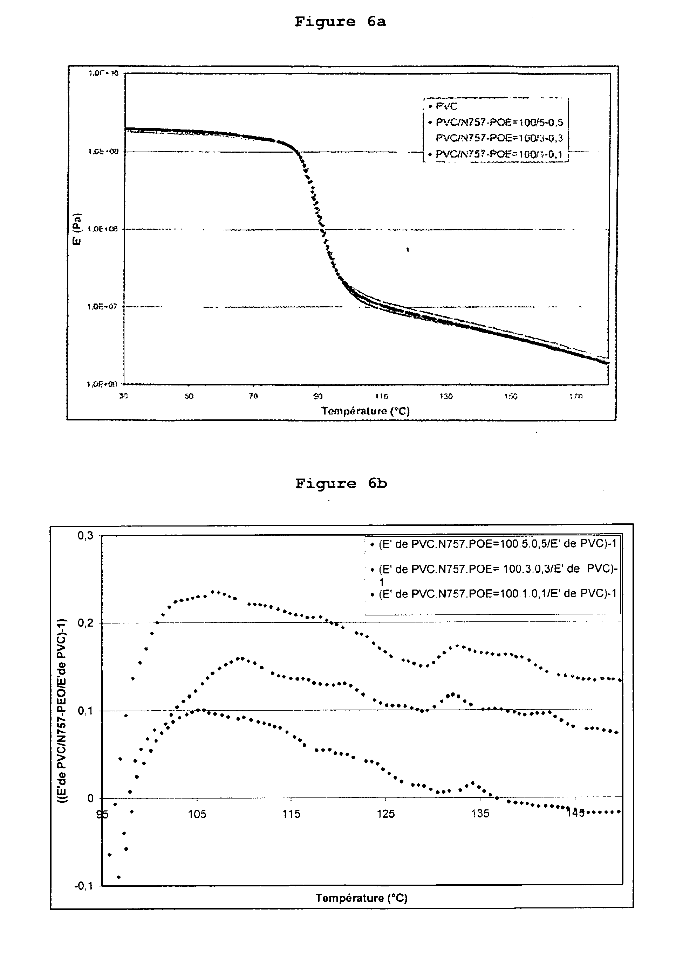

Le suivi de la variation de la partie réelle du module d'élasticité du matériau en fonction de la température caractérise ses propriétés thermomécaniques. La figure 6a présente le cas de 3 formulations PVC/(N757-POE) à des taux de 1, 3 et 5 parties pour 100, l'argile étant modifiée par par la méthode « combinée » décrite dans l'exemple 2, et le PVC étant identique à celui utilisé dans l'exemple 8.

Il apparaît que le comportement viscoélastique est globalement le même pour les différents mélanges PVC/N757-POE. Ceci signifie que la présence de montmorillonite modifiée n'a pas fait diminuer significativement la température de ramollissement du matériau, conservant ainsi la tenue thermomécanique du PVC rigide. Un léger effet de renforcement du module, de l'ordre de 10 à 20%, apparaît dans la zone terminale, au delà de la zone de transition vitreuse (figure 6b, représentant de haut en bas les résultats obtenus pour les mélanges PVC/argile modifiée dans un rapport respectif de 100/5, 100/3 et 100/1). L'effet de renforcement est montré en faisant le rapport du module E' de la formulation contenant l'argile modifiée au module E' du PVC seul, moins 1, de telle sorte que les valeurs positives correspondent au facteur de renforcement.

### Facteur de pertes mécaniques

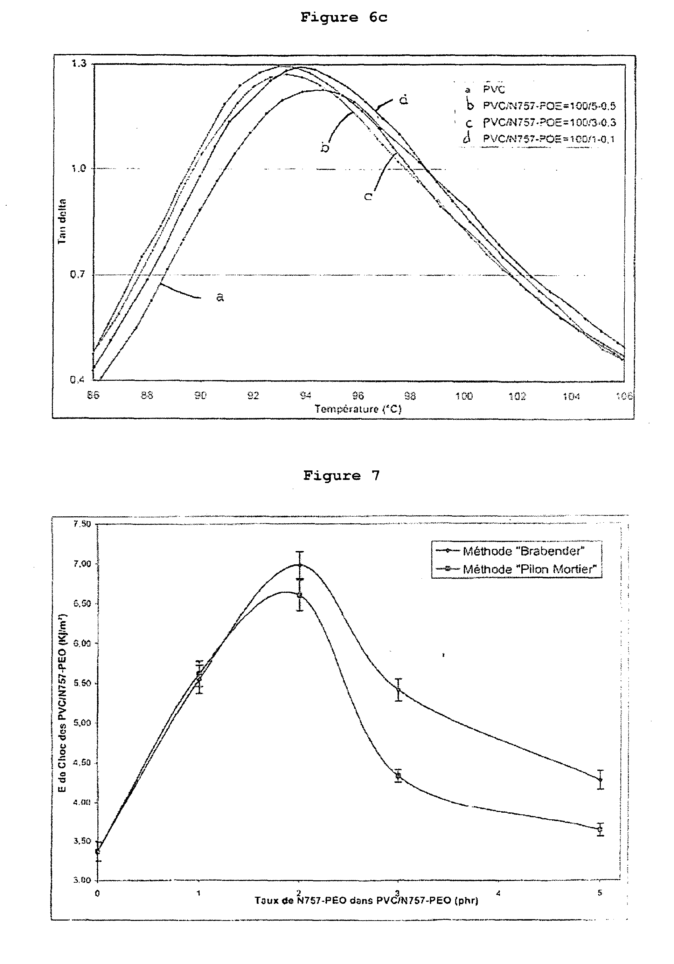

Pour les mêmes formulations, le facteur de pertes mécaniques tangente delta est représenté sur la figure 6c, en fonction de la température, dans la zone de transition vitreuse des matériaux. Les courbes a, b, c et d représentent respectivement les résultats obtenus pour le PVC seul, et pour les mélanges PVC/argile modifiée dans un rapport respectif de 100/5, 100/3 et 100/1.

Alors que les températures de transition vitreuse de ces formulations mesurées par DSC sont les mêmes, il apparaît que les maxima de tangente delta associés sont décalés vers les basses températures par la présence de montmorillonite modifiée.

On constate une augmentation de l'amplitude de ces maxima comparativement à celui du polymère seul. La figure 6b a montré que l'effet de renforcement du PVC par l'argile modifiée diminue avec la température, révélant un effet de mobilité moléculaire. Ces deux phénomènes sont la conséquence de la formation d'un réseau de nano charges provenant de la montmorillonite, couplées entre elles par le polymère PEO de haute masse molaire. Ainsi le réseau a des propriétés de dissipation d'énergie mécanique, ce qui est favorable à l'augmentation de l'énergie de rupture par choc.

### Exemple 11

### Influence de la formulation et des conditions de mélange lors de la première étape du procédé sur la résistance au choc des mélanges PVC/N757-POE.

Les produits N757-POE obtenus selon deux variantes de la première étape du procédé (la méthode "pilon-mortier" décrite dans l'exemple 1 et la méthode "combinée" décrite dans l'exemple 6) sont mélangés avec le PVC (identique à celui utilisé dans l'exemple 8) à l'état fondu sur le malaxeur Brabender, en faisant varier le taux de N757/POE par rapport au PVC, afin de tester la résistance au choc d'après la norme « Izod D638 » (entaillé).

Les résultats obtenus sont présentés figure 7. La courbe du haut correspond à la mise en oeuvre de la méthode "combinée" lors de la première étape du procédé, et la courbe du bas correspond à la mise en oeuvre de la méthode "pilon-mortier". Il apparaît que la résistance au choc du PVC/N757-POE augmente lorsque le taux de N757-POE augmente, et que la résistance au choc atteint sa valeur maximale pour 2% de N757-POE.

On constate que pour un taux de N757-POE égal ou supérieur à 2 parties pour cent de polymère, l'énergie de rupture des échantillons pour lesquels le mélange a été fait en méthode «combinée» est légèrement plus élevée que pour ceux réalisés avec la méthode « pilon -mortier ». Dans les deux cas, pour la propriété testée, un optimum est obtenu.

### Exemple 12

### Influence de la masse molaire et du taux de PEO dans l'argile modifiée sur la résistance au choc des mélanges PVC/N757-POE.

Différentes formulations ont été réalisées, avec pour chacune 100 parties de PVC (identique à celui de l'exemple 8)et 2 parties d'un mélange N757-POE. Elles diffèrent par le rapport du mélange N757/POE, qui est respectivement de 10/1, 10/3 et 10/5, ainsi que par la masse molaire du PEO, qui est de 1500 g/mol, 10 000 g/mol ou 100 000 g/mol. Les résultats sont présentés dans le Tableau 3. Il apparaît clairement que cette dernière valeur est préférable pour la résistance au choc, pour une teneur de 1 partie.

**Tableau 3**

| | PVC/(N757-POE₁₅₀₀) = 100/2 | | | |
|---|---|---|---|---|
| Echantillon | 0 | 1 | 3 | 5 |
| Rapport N₇₅₇/POE₁₅₀₀ | 10-0 | 10-1 | 10-3 | 10-5 |
| E de choc (kJ/m²) | 3,0 | 4,4 | 3, 4 | 3,3 |
| Coefficient de variation | 8 % | 8 % | 5 % | 8 % |

| | PVC/(N757-POE_{10 000}) = 100/2 | | | |
|---|---|---|---|---|
| Echantillon | 0 | 1 | 3 | 5 |
| Rapport N₇₅₇/POE₁₀₀₀₀ | 10-0 | 10-1 | 10-3 | 10-5 |
| E de choc (kJ/m²) | 3,0 | 4,0 | 4,1 | 4,1 |
| Coefficient de variation | 8 % | 8 % | 7 % | 9 % |

| | PVC/(N757-POE₁₀₀ 000) = 100/2 | | | |
|---|---|---|---|---|
| Echantillon | 0 | 1 | 3 | 5 |
| Rapport N₇₅₇/POE_{100 000} | 10-0 | 10-1 | 10-3 | 10-5 |
| E de choc (kJ/m²) | 3,0 | **6,6** | 4,6 | 4,4 |
| Coefficient de variation | 8 % | 6 % | 6 % | 9 % |

### Exemple 13

### Influence de la nature de l'argile sur les propriétés mécaniques du matériau nanocomposite PVC/argile/POE,

Des formulations de PVC rigide contenant des argiles modifiées à raison de 0, 1, 2, 3 et 5 parties pour 100 parties de PVC ont été réalisées selon les conditions générales décrites dans l'Exemple 8. Le POE utilisé est de masse 100 000 g/mol, et les argiles utilisées sont la N757 (identique à celle de l'exemple 1) et la LD (identique à celle de l'exemple 3). Les argiles sont modifiées par la « méthode combinée » de l'exemple 2. De plus, à titre comparatif, des formulations ont été réalisées avec les argiles non modifiées.

Les propriétés mécaniques ont été déterminées selon les méthodes standard, sur des éprouvettes taillées dans les plaques réalisées à la presse.

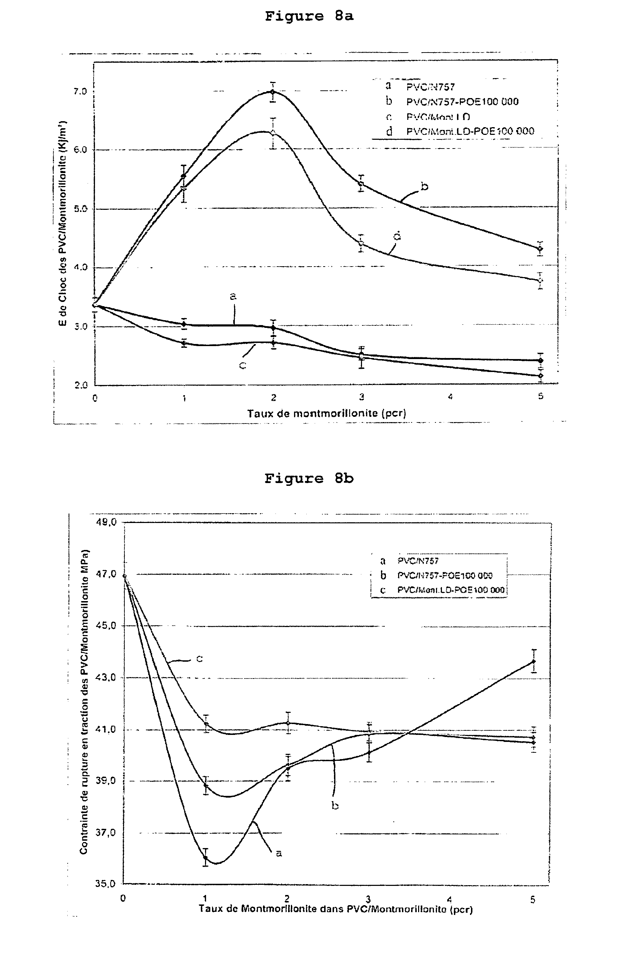

La figure 8a illustre les différentes valeurs de l'énergie de rupture par choc, en montrant l'efficacité du traitement des argiles par le POE, en particulier l'optimum obtenu pour 2 parties d'argile modifiée, avec les deux types d'argile. Les courbes a, b, c et d représentent les résultats obtenus respectivement pour les mélanges, PVC/N757, PVC/N757 modifiée par du POE, PVC/LD et PVC/LD modifiée par du POE.

Il apparaît que les montmorillonites non modifiées font légèrement diminuer l'énergie de rupture par choc, tout comme le ferait une charge minérale ordinaire pour les mêmes faibles teneurs. Par contre, la modification par le POE conduit à une augmentation significative de l'énergie de rupture, jusqu'à 2pcr. La morphologie observée dans ce cas correspond à des tactoïdes de différentes tailles et à des particules primaires.

Au delà d'une teneur de 2pcr, l'augmentation du taux de « défauts » apportés par les particules non modifiées est susceptible de faire chuter les propriétés.

La figure 8b illustre les différentes valeurs de la contrainte de rupture en traction en fonction du taux, de la nature et de la modification des montmorillonites. Les courbes a, b et c représentent respectivement les résultats obtenus pour les mélanges, PVC/N757, PVC/N757 modifiée par du POE, et PVC/LD modifiée par du POE.

On observe que de l'argile non modifiée, à faibles teneurs, diminue fortement la contrainte de rupture, et que ce phénomène, connu, est atténué par l'emploi d'argile modifiée par le POE. De plus, l'argile LD modifiée montre le meilleur comportement.

## Revendications

1. Procédé de préparation d'un matériau constitué par une matrice de PVC renforcée par une argile, **caractérisé en ce qu'**il comprend les étapes successives suivantes:
(1) - préparation d'une argile modifiée par mélange d'une argile naturelle avec un composé solvatant non volatil, le mélange étant mis en oeuvre en appliquant au moins l'une des contraintes mécaniques suivantes :
- compression, à une vitesse comprise entre 0,01 et 0,5 m/s ;
- cisaillement, à une vitesse comprise entre 0,05 et 5 m/s ;
- friction, à une vitesse comprise entre 0,05 et 5 m/s ;
- attrition, à une vitesse comprise entre 2 et 4 m/s ;
(2) incorporation de l'argile modifiée dans le PVC par malaxage à l'état fondu, les conditions de mise en oeuvre du malaxage étant telles que :
- la vitesse de compression est comprise entre 0,1 et 5 m/s ;
- la vitesse de cisaillement est comprise entre 0,05 et 5 m/s.

2. Procédé selon la revendication 1, **caractérisé en ce que** l'étape (1) est mise en oeuvre à température ambiante.

3. Procédé selon la revendication 1 ou 2, **caractérisé en ce que**, entre l'étape (1) et l'étape (2), le mélange est chauffé à une température supérieure à la température de fusion du composé solvatant.

4. Procédé selon l'une quelconque des revendications précédentes, **caractérisé en ce que** l'étape (2) est mise en oeuvre à une température comprise entre 150°C et 190°C.

5. Procédé selon l'une quelconque des revendications précédentes, **caractérisé en ce que** l'argile est choisie parmi une smectite, une hectorite ou une vermiculite.

6. Procédé selon la revendication 5, **caractérisé en ce que** l'argile est une montmorillonite.

7. Procédé selon l'une quelconque des revendications précédentes, **caractérisé en ce que** le composé solvatant est un polymère choisi parmi le polyoxyéthylène (POE) ou la polyéthylène imine (PEI).

8. Procédé selon la revendication 7, **caractérisé en ce que** l'argile est une montmorillonite et l'agent solvatant est le POE.

9. Procédé selon la revendication 7 ou 8, **caractérisé en ce que** l'agent solvatant est le POE, et **en ce que** la proportion en poids argile/POE utilisée lors de l'étape (1) est comprise entre 10/1 et 10/10.

10. Procédé selon la revendication 9, **caractérisé en ce que** la proportion en poids argile/POE utilisé lors de l'étape (1) est comprise entre 10/1 et 10/5.

11. Procédé selon la revendication 10, **caractérisé en ce que** la proportion en poids argile/POE utilisée lors de l'étape (1) est comprise entre 10/1 et 10/2.
